# EUROPÄISCHE PATENTSCHRIFT

(11) **EP 1 932 413 B1**
(45) Veröffentlichungstag und Bekanntmachung des Hinweises auf die Patenterteilung: **16.06.2010**
(21) Anmeldenummer: 07023623.7
(22) Anmeldetag: 06.12.2007
(51) Int. Cl.: A01C 7/10

(54) **Vorrichtung zum optischen Zählen kleiner Körperchen**
Device for optical counting of small bodies
Dispositif destiné au comptage optique de petits corps

(30) Priorität: 13.12.2006 DE 102006058687
(43) Veröffentlichungstag der Anmeldung: 18.06.2008
(73) Patentinhaber: Amazonen-Werke H. Dreyer GmbH & Co. KG, 49205 Hasbergen (DE)
(72) Erfinder: Kötter, Heiner, 49086 Osnabrück (DE)

(56) Entgegenhaltungen:
- WO-A-2005/096798
- US-A- 3 974 377
- US-A- 5 883 383

## Beschreibung

Die Erfindung betrifft eine Vorrichtung zum optische Zählen kleiner Körperchen.

Derartige Vorrichtungen sind beispielsweise durch die US-A-3 974 377 bekannt. Diese Vorrichtungen werden auch als Körnerzähler bezeichnet und zum Zählen von Saatkörnern bei landwirtschaftlichen Sämaschinen eingesetzt. Der Messraum dieser Körnerzähler wird von lichtdurchlässigen Scheiben gebildet, hinter denen Lichtemitter und Lichtdetektoren der Sensoren angeordnet sind. Aufgrund von Luftverwirbelungen lagern sich im Förderluftstrom befindliche Partikel am den lichtdurchlässigen Scheiben an. Hierdurch verschmutzen diese, so dass der Strahlengang, der von den Lichtemittern erzeugt wird und auf die Lichtdetektoren gerichtet ist, behindert wird, so dass keine zuverlässigen Messungen durchgeführt werden können.

Der Erfindung liegt die Aufgabe zugrunde, eine zuverlässige Erfassung der zu zählenden Körperchen zu gewährleisten.

Diese Aufgabe wird erfindungsgemäß durch die kennzeichnenden Merkmale des Patentanspruches 1 gelöst. Infolge dieser Maßnahmen kann durch die Trennstelle eine Reinigungsöffnung geschaffen werden, so dass durch die Reinigungsöffnung die Scheiben mit einer geeigneten Vorrichtung von Zeit zu Zeit zu reinigen sind. Hierdurch ist gewährleistet, dass eine zuverlässige Erfassung aufgrund des zumindest annähernd störungsfreien Durchdringung des von den Lichtemittern erzeugten Strahlengangs zu den Detektoren zu zählenden Körperchen durch die lichtdurchlässigen hindurch erfolgen kann.

Um die Möglichkeit zu schaffen, dass in einfacher Weise der Messraum gereinigt werden kann, ist vorgesehen, dass die Trennstelle zwischen dem Gehäuse des Messraumes und der Förderleitung angeordnet ist.

Eine vorteilhafte Anordnung der Trennstelle in der Förderleitung zur Erreichung der lichtdurchlässigen Scheiben zu deren Reinigung wird dadurch erreicht, dass die Trennstelle in Förderrichtung gesehen sich hinter dem Messraum und/oder den lichtdurchlässigen Scheiben in der Förderleitung befindet.

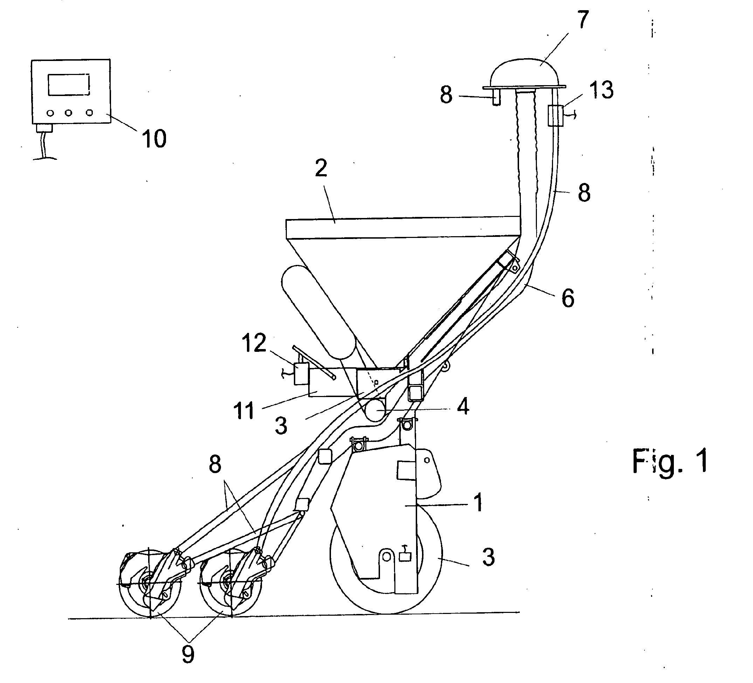

Weitere Einzelheiten der Erfindung sind der Beispielsbeschreibung und den Zeichnungen zu entnehmen. Hierbei zeigen
- Fig. 1: eine erfindungsgemäß ausgestattete Sämaschine in Prinzipdarstellung,

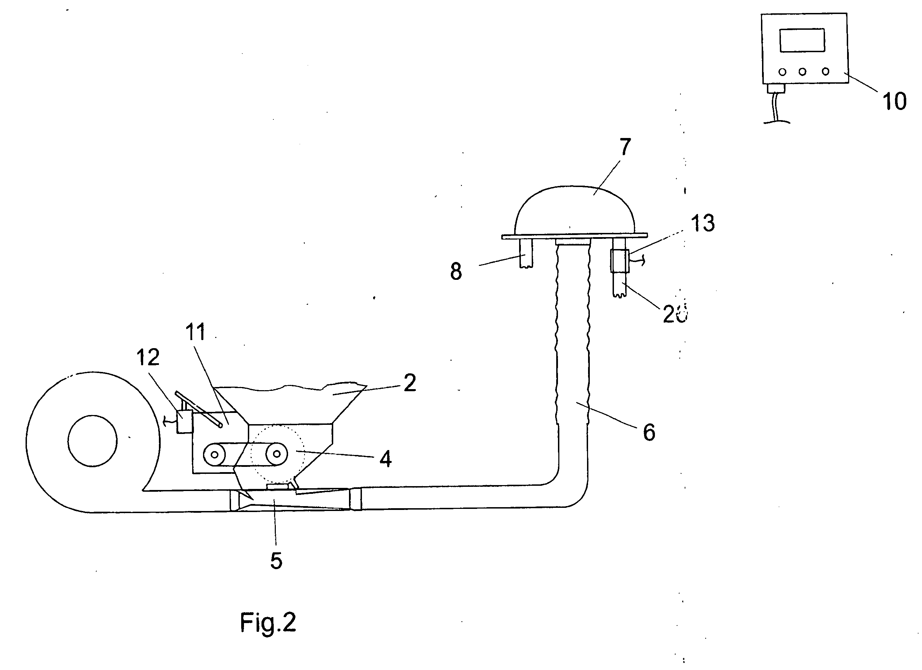

- Fig. 2: die Anordnung des Sensors zum Zählen kleiner Körperchen in Prinzipdarstellung,
- Fig. 3: die Verteilerleitung mit dem erfindungsgemäßen Messraum des Sensors mit der Trennstelle im Schnitt und vergrößerter Darstellung und in Prinzipdarstellung und
- Fig. 4: die an der Trennstelle getrennte Verteilerleitung mit Messraum und Sensor in der Darstellungsweise entsprechend Fig. 3.

Die Sämaschine ist als pneumatische Verteilmaschine ausgebildet. Sie weist einen Rahmen 1 und Vorratsbehälter 2 auf. Der Rahmen 1 stützt sich auf Laufrädern 3 oder einer Bodenwalze auf dem Boden ab. Dem Vorratsbehälter 2 ist ein Zentraldosierer 4 zugeordnet, der das sich im Vorratsbehälter 2 befindliche Saatgut über eine Schleuse 5 in eine zentrale Zuführleitung 6, die als Steigrohr ausgebildet ist, einleitet. Dieses Steigrohr 6 mündet an seinem oberen Ende in einem Verteilerkopf 7, über den das dosierte Saatgut auf die einzelnen sich an dem Verteilerkopf anschließenden Saatleitungen 8 aufgeteilt wird. Die Saatleitungen 8 führen zu den am Rahmen 1 angelenkten Säscharen 9. Dem Laufrad 3 ist eine Wegstreckenmesseinrichtung zugeordnet, die Messdaten an eine als Bordcomputer 10 ausgebildete elektronische Auswerteeinheit übermittelt. Der Dosierer 4 wird über einen Antriebsstrang und ein einstellbares Getriebe 11 von einer Kraftquelle angetrieben. Das Getriebe 11 wird über einen Einstellmotor 12 eingestellt und von dem Bordcomputer 10 angesteuert.

Zumindest einer der Saatleitungen 8 ist eine Vorrichtung 13 zum optischen Zählen kleiner Körperchen, die als Körnerzählsensor 13 ausgebildet ist, zugeordnet. Der Sensor 13 ist in der Saatleitung 8 angeordnet und weist das Gehäuse 14 auf. In dem Gehäuse 14 befindet sich ein Messraum 15, den die in der Förderleitung 8 geförderten Saatkörner 16 passieren. Der Sensor 13 weist zumindest einen Lichtemitter 17 und zumindest einen Lichtdetektor 18 auf, wobei der Lichtdetektor 18 als CCD-Zeile oder Zeilenkamera ausgebildet ist. Der Lichtemitter 17 ist als Laserlichtquelle ausgebildet. Hierbei ist der jeweiligen Laserlichtquelle 17 eine den Laserlichtstrahl 19 breit auffächernde und parallele Lichtstrahlen 20 erzeugende Linse 21 angeordnet. Insgesamt weist der Sensor 13 zwei um 90° versetzt Lichtdetektoren 18 und Lichtemitter 17 auf. Die Lichtemitter 17 und Lichtdetektoren 18 der Sensoren 13 sind beabstandet zu der Kontur der Wände 22 des Messraumes 15 angeordnet. Die Wände 22 des Messraumes sich als lichtdurchlässige Scheiben 23 ausgebildet. Die Lichtemitter 17 und Lichtdetektoren 18 der Sensoren 13 sind abgedichtet hinter beabstandet zu dem lichtdurchlässigen Dichtungsscheiben 23 angeordnet.

Der Messraum 15 des Sensors 13 befindet sich zwischen zwei Übergangstrichtern 24 und 25 die in der Förderleitung 8 angeordnet sind. In dem einander anschließenden Bereich der Übergangstrichter 24, 25 befindet sich der Messraum 15, dessen Wände 22 von den lichtdurchlässigen Scheiben 23 gebildet werden. Die lichtdurchlässigen Scheiben 23 sind abdichtend in einem den Messraum 15 aufweisenden Gehäuse 14, in welchem die Übergangstrichter 24, 25 befinden angeordnet. Die Saatkörner 16 durchströmen den Messraum 15 in Pfeilrichtung 26.

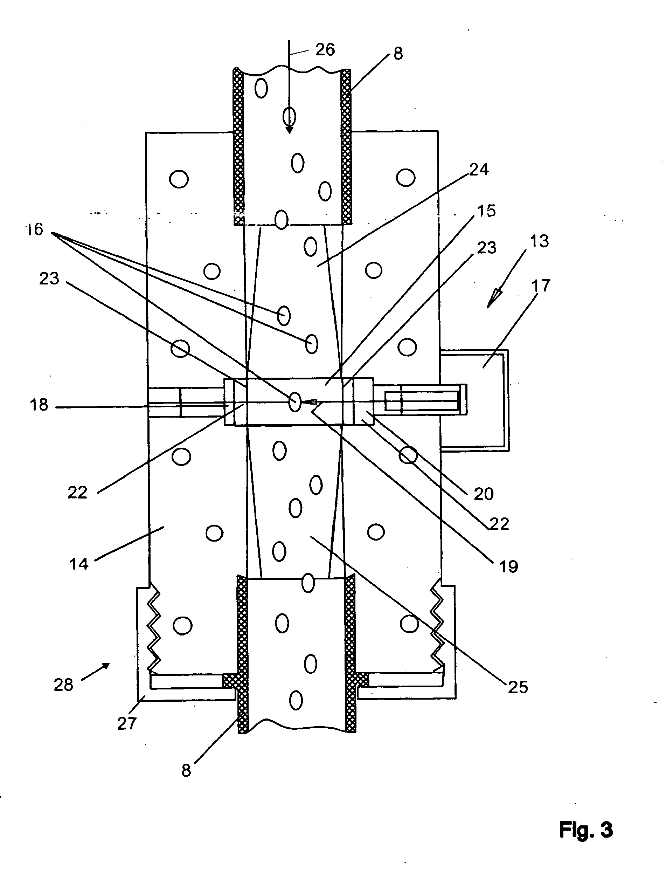

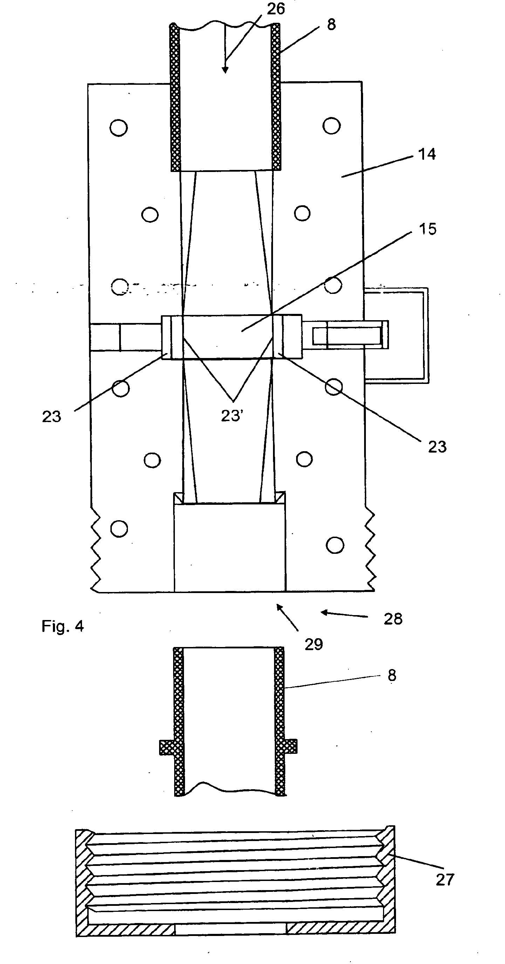

Der in Pfeilrichtung 8 an den Messraum 15 anschließende Bereich der Leitung 8 wird mittels der Überwurfmutter 27 an dem Gehäuse 14 befestigt. Durch die Überwurfmutter 27 kann im Ausführungsbeispiel der, in Pfeilrichtung 26 gesehen, hinter dem Messraum 15 sich befindende Teil der Leitung 8 von dem Gehäuse 14 abgenommen werden, wie Fig. 4 zeigt, so dass eine Trennstelle 28 in der Leitung 8 hinter dem Messraum 15 entsteht. Über diese Trennstelle 28 wird eine Reinigungsöffnung 29 geschaffen, so dass durch die Trennstelle 28 die Scheiben 23 des Messraumes 15 auf ihrer Messraumseite 23' zu reinigen ist. Die Trennstelle 28 befindet sich zwischen dem Gehäuse 14 des Messraumes 15 und der Förderleitung 8, wie Fig. 3 und 4 zeigen. Des weiteren ist die Trennstelle 28 in Förderrichtung 26 gesehen, hinter dem Messraum 15 und dem lichtdurchlässigen Scheiben 23 in der Förderleitung 8 angeordnet.

Um die Scheiben 23 zu reinigen wird die Überwurfmutter 27 abgenommen, so dass die Förderleitung 8 von dem Gehäuse abgenommen wird. Über diese Trennstelle 28 entsteht eine Öffnung 29 durch welche die Scheiben 23, wie vor bereits gesagt, mittels eines geeigneten Gegenstandes, Reinigungsmittels oder Reinigungsvorrichtung zu reinigen sind. Nach dem Reinigen der Messscheiben 23 auf der Messraumseite 23' wird die Förderleitung 8 wieder in das Gehäuse 14 eingesteckt und mit der Überwurfmutter 27 an dem Gehäuse 14 gesichert. Anschließend kann die Ausbringarbeit in gewohnter Weise fortgesetzt werden.

## Patentansprüche

1. Vorrichtung zum optischen Zählen kleiner Körperchen, insbesondere die von einer Sämaschine auszubringenden Saatkörner, bei denen die zu zählenden Körper einen mit optischen Sensoren (13) besetzten und in einer Förderleitung (8) angeordneten Messraum (15) passieren und dabei den Lichtgang zwischen einem Lichtemitter (17) und einem Lichtdetektor (18) der Sensoren (13) unterbrechen, wobei die Förderleitung (8) vor und hinter dem Messraum (15) einen kreisrunden Querschnitt aufweist, wobei der Messraum (15) einen rechteckigen, vorzugsweise quadratischen Querschnitt aufweist, wobei die Wände (22) des Messraumes (15) von lichtdurchlässigen und planen und/oder ebenen Scheiben (23) gebildet werden, **dadurch gekennzeichnet, dass** die Vorrichtung eine Trennstelle (28), durch die eine Reinigungsöffnung (29) geschaffen wird, aufweist, dass durch die als Reinigungsöffnung ausgebildete Trennstelle (28) die Scheiben auf ihrer Messraumseite (23') mittels eines Reinigungsmittels und/oder einer Reinigungsvorrichtung zu reinigen sind.

2. Vorrichtung nach Anspruch 1, **dadurch gekennzeichnet, dass** die Trennstelle (28) zwischen dem Gehäuse (14) des Messraumes (15) und der Förderleitung (8) angeordnet ist.

3. Vorrichtung nach Anspruch 1, **dadurch gekennzeichnet, dass** die Trennstelle (28) in Förderrichtung (26) gesehen sich hinter dem Messraum (15) und/oder den lichtdurchlässigen Scheiben (23) in der Förderleitung (8) befindet.

## Claims

1. Apparatus for optically counting small bodies, in particular the seeds to be discharged by a sowing machine, in which the bodies to be counted pass a measurement space (15), which is occupied by optical sensors (13) and is arranged in a conveying line (8), and while doing so interrupt the light path between a light emitter (17) and a light detector (18) of the sensors (13), wherein the conveying line (8) has, upstream and downstream of the measurement space (15), a circular cross section, wherein the measurement space (15) has a rectangular, preferably square, cross section, wherein the walls (22) of the measurement space (15) are formed by light-transparent and planar and/or flat disks (23), **characterized in that** the apparatus has a separation location (28), by which a cleaning opening (29) is provided, **in that** the disks are to be cleaned on their measurement space-side (23') using a cleaning agent and/or a cleaning apparatus through the separation location (28) which is in the form of a cleaning opening.

2. Apparatus according to Claim 1, **characterized in that** the separation location (28) is arranged between the housing (14) of the measurement space (15) and the conveying line (8).

3. Apparatus according to Claim 1, **characterized in that** the separation location (28) is located, when viewed in the conveying direction (26), downstream of the measurement space (15) and/or the light-transparent disks (23) in the conveying line (8).

## Revendications

1. Dispositif de comptage optique de petits éléments, notamment de grains de semences distribués par un semoir, dans lequel, les éléments à compter traversent un espace de mesure (15) équipé de capteurs optiques (13) dans une conduite de transfert (8) et coupent ainsi le faisceau lumineux entre un photoémetteur (17) et un photodétecteur (18) des capteurs (13),
la conduite de transfert (8) ayant une section circulaire en amont et en aval de la chambre de mesure (15),
la chambre de mesure (15) ayant une section rectangulaire de préférence carrée,
les parois (22) de la chambre de mesure (15) étant formées par des plaques (23) transparentes et planes et/ ou lisses,
**caractérisé en ce que**
le dispositif comporte un point de séparation (28) créant un orifice de nettoyage (29),
le point de séparation (28) est réalisé par l'orifice de nettoyage permettant de nettoyer les vitres sur le côté intérieur de la chambre de mesure (23') à l'aide d'un agent de nettoyage et/ou d'un dispositif de nettoyage.

2. Dispositif selon la revendication 1,
**caractérisé en ce que**
le point de séparation (28) est prévu entre le boîtier (14) de la chambre de mesure (15) et la conduite de transfert (8).

3. Dispositif selon la revendication 1,
**caractérisé en ce que**
le point de séparation (28) se situe en aval de la chambre de mesure (15) dans le sens du transfert (26) et/ou derrière les vitres transparentes (23) dans la conduite de transfert (8).
